(19) Europäisches Patentamt
European Patent Office
Office européen des brevets

(11) **EP 1 112 890 B1**

(12) **EUROPÄISCHE PATENTSCHRIFT**

(45) Veröffentlichungstag und Bekanntmachung des Hinweises auf die Patenterteilung:
**07.01.2015 Patentblatt 2015/02**

(51) Int Cl.:
**B60K 35/00** *(2006.01)* **G06T 15/50** *(2011.01)*

(21) Anmeldenummer: **00124138.9**

(22) Anmeldetag: **07.11.2000**

(54) **Verfahren und Vorrichtung zur Anzeige von Fahrerinformationen auf einem gemeinsamen Fahrerinformationsdisplay**

Method and device for showing driver information on a common driver information display

Méthode et dispositif d'affichage d'informations pour le conducteur sur un afficheur commun

(84) Benannte Vertragsstaaten:
**DE ES FR GB IT**

(30) Priorität: **30.12.1999 DE 19963754**

(43) Veröffentlichungstag der Anmeldung:
**04.07.2001 Patentblatt 2001/27**

(73) Patentinhaber: **ROBERT BOSCH GMBH**
**70442 Stuttgart (DE)**

(72) Erfinder: **Geisler, Thomas**
**76133 Karlsruhe (DE)**

(56) Entgegenhaltungen:
**EP-A- 0 918 310    US-A- 5 089 826**
**US-A- 5 379 129**

EP 1 112 890 B1

**Beschreibung**

Stand der Technik

Die vorliegende Erfindung betrifft ein Verfahren und eine Vorrichtung zur graphischen Anzeige von Fahrerinformationen für ein Kraftfahrzeug, wobei von verschiedenen, miteinander über einen Bus vernetzten Einzelgeräten herrührende Fahrerinformationen auf einem beliebigen Hintergrund eines gemeinsamen Fahrerinformationsdisplays mit einer graphischen Benutzeroberfläche (GUI = Graphical User Interface) darstellbar sind.

Obwohl auf beliebige Kraftfahrzeuge anwendbar, werden die vorliegende Erfindung sowie die ihr zugrundeliegende Problematik in Bezug auf eine an Bord eines Automobils befindlich Anzeigevorrichtung erläutert.

Dazu sei bemerkt, dass im Folgenden der Begriff "Fahrerinformationsdisplay" allgemein verstanden werden soll, sowohl als Display in einem Kombiinstrument, als Display in der Mittelkonsole eines Fahrzeugs, als Display im Fond der Fahrzeuge, z. B. in den Kopfstützen des Fahrer- und Beifahrersitzes, usw.

Früher wurden in Automobilen verschiedene Einzelgeräte mit eigenen graphischen Benutzeroberflächen zur Anzeige von Fahrerinformationen eingesetzt, wie z.B. Radio, Telefon, Navigationshilfe, etc. Dabei hat sich herausgestellt, dass es unkomfortabel ist, jedes Einzelgerät mit einer graphischen Benutzeroberfläche zu versehen, da diese nur auf einem verhältnismäßig kleinem jeweiligen Fahrerinformationsdisplay des Einzelgerätes, beispielsweise einem Flüssigkristall - Display, abgebildet werden kann.

Infolge dieses Nachteils setzen die Kraftfahrzeughersteller heutzutage auf sogenannte gemeinsame Fahrerinformationsdisplays, welche zentral in der Mittelkonsole oder dem Kombiinstrument des Kraftfahrzeuges untergebracht sind und welche die von verschiedenen Einzelinstrumenten herrührenden Fahrerinformationen zentral anzeigen. Diese gemeinsamen Fahrerinformationsdisplays können ein größeres Format und somit eine bessere Auflösung als die Einzeldisplays der Einzelgeräte aufweisen. Außerdem bieten die gemeinsamen Fahrerinformationsdisplays die Möglichkeit zur Farbwiedergabe und zur Wiedergabe attraktiverer bzw. sinnfälligerer Symbole. Die Darstellungsform und das Design sind ferner frei programmierbar. Zusätzlich kann eine einheitliche Hardware für viele Modelle und Varianten verwendet werden.

Um nun mit einem solchen Produkt erfolgreich zu sein, ist eine hohe Qualität der Graphik zu fordern. Dies kann erreicht werden, indem die graphische Gesamtdarstellung aus vorverarbeiteten Teilgraphiken zusammengesetzt wird. Eine Teilgraphik kann ein Symbol, ein alphanumerisches Zeichen, eine Graphik oder ein fotorealistisches Bild sein. Wird allerdings eine solche Teilgraphik in einen beliebigen Hintergrund eingefügt, so ergeben sich störende Effekte, wie z.B. das Abzeichnen von Treppenstufen zwischen dem Hintergrund und der Teilgraphik.

Bei einer Methode zur Überlagerung von Hintergrund und Teilgraphiken nach dem Stand der Technik liegen Hintergrund und Teilgraphiken als Bitmaps vor. Dabei werden die Pixel der Teilgraphik-Bitmap, die nicht zur Teilgraphik gehören, als transparent interpretiert, und die Pixel, die der darzustellenden Teilgraphik zugeordnet werden, besitzen gegenüber den Pixeln des Hintergrundes der graphischen Benutzeroberfläche des gemeinsamen Fahrerinformationsdisplays Vorrang. Das so erzielte Überlagerungsergebnis zeigt allerdings nicht mehr das in der Teilgraphik vorhandene Antialiasing gegen den Hintergrund.

Die der vorliegenden Erfindung zugrundeliegende Problematik besteht also allgemein darin, beliebige Teilgraphiken auf einem Display mit beliebigem Hintergrund ohne Störeffekte darzustellen.

Das Compositing (Einfügen einer Teilgraphik in einen Hintergrund) lässt sich verbessern. Zu jedem Pixel (= Bild-punkt, bestehend aus Rot- , Grün- und Blauanteil) der Graphik existiert ein zusätzlicher $\alpha$-Wert, der die Kombination der Pixel der Teilgrafik und des gemeinsamen Hintergrundes steuert. Diese $\alpha$-Werte bilden den sogenannten $\alpha$-Kanal, mit dem der Übergang von Teilgrafik-Bitmap (Source) nach Hintergrund (Destination) befriedigend realisiert wird.

Als nachteilhaft bei obigem bekanntem Ansatz hat sich die Tatsache herausgestellt, dass in Embedded Systemen, wie sie im Kfz-Bereich verwendet werden, die beteiligen Hardwarekomponenten die Anforderungen für diese Zusammensetzungs- oder Compositing-Methode nicht erfüllen, da der Rechenaufwand zu hoch ist.

Aus der US 5,089,826 A ist ein Navigationssystem bekannt, bei dem in einer Anzeige eine Karte dargestellt wird, die auf Kartendaten basiert und in der die aktuelle Position eines Fahrzeugs, in dem die Navigationsvorrichtung angeordnet ist, dargestellt ist. Ferner dient die Anzeige auch zur Steuerung der Navigationsfunktion. An die Navigationsvorrichtung sind über verschiedene Schalter und verschiedene Ein-/Ausgabeeinrichtungen mehrere Geräte angeschlossen. Die Kartendaten sind als Vektordaten auf einer CD-ROM abgelegt.

Aus der US 5,379,129 A ist ein Verfahren zum Zusammensetzen eines Quellbildes und eines Zielbildes bekannt, bei der eine Maske benutzt wird, um in einem digitalen Bildverarbeitungssystem ein Gesamtbild zu erhalten. Die Kombination der Bilder richtet sich nach der Formel Ergebnis = ((1 - Maske • Quelle) + Maske • Ziel). Hierdurch ist es beispielsweise möglich, einer Zielgrafik einen Text mit einer mit durch die Maske vorgegebenen Struktur der Quelle zu überlagern.

Vorteile der Erfindung

Das erfindungsgemäße Anzeigeverfahren mit den Merkmalen des Anspruchs 1 und die entsprechende Anzeigevorrichtung gemäß Anspruch 5 weisen gegenüber den bekannten Lösungsansätzen den Vorteil auf, dass in den einzelnen Geräten in einem Kraftfahrzeug vorverarbeitete Teilgrafiken abgespeichert und nur wenige Rechenoperationen für ein hochqualitatives Compositing vom Fahrerinformationsdisplay bzw. diesem zugeordneten Rechen- und Darstellungseinheiten ausgeführt werden.

Die der vorliegenden Erfindung zugrunde liegende Idee besteht darin, dass rechenintensive Bildverarbeitungsoperationen, wie z.B. Texture - Mapping von 3 D - Modellen, Antialiasing (Glättung von Treppenstufen zwischen einem Hintergrund und einem eingefügten graphischen Objekt) usw. in einer Bildverarbeitungssoftware vorab durchgeführt werden. Das Ergebnis lässt sich in einer Bitmap mit sogenanntem $\alpha$ - Kanal abspeichern. Dies birgt den Vorteil in sich, dass Teilgraphiken vorverarbeitet und in den entsprechenden Einzelgeräten als Bitmaps vorab gespeichert werden. Somit können diese Teilgraphiken beliebig kombiniert und in einem gemeinsamen Hintergrund eingefügt werden, in dem mittels des $\alpha$ - Kanals eine hochqualitative Gesamtgraphik ohne Treppeneffekte erzielbar ist.

Da aufwendige Rechenoperationen vorab ausgeführt werden, können im Kfz - Bereich kleinere Komponenten mit geringeren Leistungsanforderungen eingesetzt werden, da nur die notwendigsten Bildverarbeitungsoperationen unmittelbar von den im Kfz -Bereich eingesetzten Bauteilen ausgeführt werden.

Jedes Einzelgerät im Cockpit eines Kraftfahrzeuges, wie z.B. Radio, Telefon, Navigationshilfe, mit einem zur Grundausstattung des Kraftfahrzeuges gehörenden gemeinsamen Fahrerinformationsdisplay enthält von ihm benötigte Teilgraphiken, z.B. Verkehrsfunksymbol, Wegleitsymbol, Telefonnummern - Anzeige usw., entsprechend der zu ihnen gehörenden Funktionen, welche im gemeinsamen Fahrerinformationsdisplay dargestellt werden sollen.

Damit kann jeder Hersteller die Darstellung des von ihm gelieferten Einzelgerätes auf der graphischen Benutzeroberfläche selbst bestimmen, ohne dass beim Compositing ein Qualitätsverlust entsteht. Ferner ist es dem Benutzer freigestellt, seine Gesamtgraphik mit beliebigem Hintergrund zu versehen, da das Compositing in jeglicher Farbkombination unter Beibehaltung des Antialiasing der Teilgraphiken ausführbar ist.

In den Unteransprüchen finden sich vorteilhafte Weiterbildungen und Verbesserungen des jeweiligen Gegenstandes der Erfindung.

Gemäß einer bevorzugten Weiterbildung wird eine Filterung eines Supersamplings der Teilgraphik-Bitmaps durchgeführt.

Gemäß einer bevorzugten Weiterbildung werden aus den Teilgraphik-Bitmaps graphische Zweitdarstellungen hergestellt, in denen Farbbildpunkte der Supersamplings der jeweiligen Teilgraphik-Bitmaps , die Hintergründen der Teilgraphik zugeordnet werden, als schwarze Bildpunkte, und Farbbildpunkte, die nicht den Hintergründen zugeordnet werden, als weiße Bildpunkte ausgebildet werden.

Gemäß einer bevorzugten Weiterbildung werden durch Filterung der Supersamplings der entsprechenden graphischen Zweitdarstellungen Graubilder erzeugt, die jeweils den entsprechenden Teilgraphik-Bitmaps zugewiesen werden, wobei jedem Bildpunkt der Graubilder ein entsprechender $\alpha$-Wert zur Angabe des Grautons zugeordnet wird.

Gemäß einer bevorzugten Weiterbildung werden die graphischen Darstellungen mit den entsprechenden zugehörigen $\alpha$-Kanälen im jeweiligen Einzelgerät in einem komprimierten Format abgespeichert.

ZEICHNUNGEN

Ausführungsbeispiele sind in den Zeichnungen dargestellt und in der nachfolgenden Beschreibung näher erläutert.

Es zeigen:

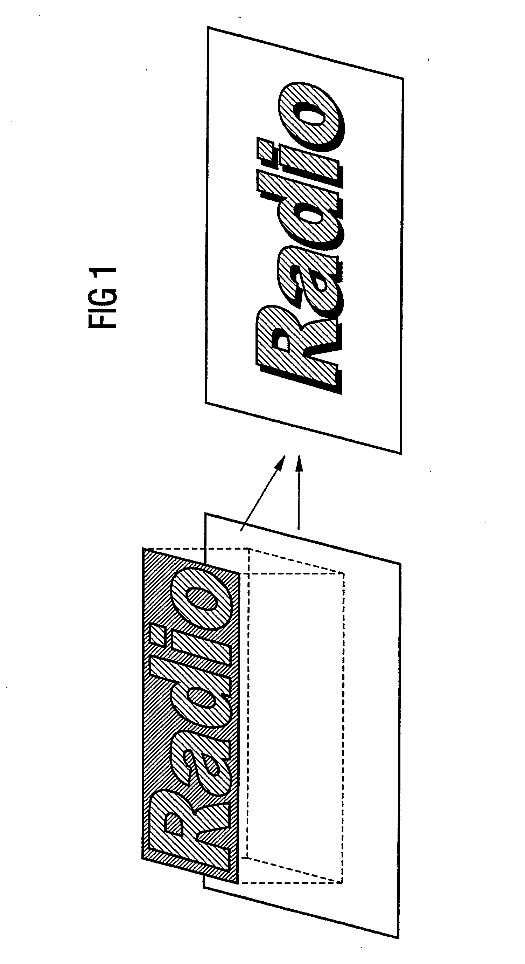

Fig. 1    eine Einblendungsvariante einer graphischen Darstellung in das Hintergrundbild eines gemeinsamen Fahrerinformationsdisplays nach dem Stand der Technik;

Fig. 2    ein Blockschaltbild einer Vorrichtung zur Anzeige von Fahrerinformationen in einem Kraftfahrzeug als Ausführungsbeispiel der vorliegenden Erfindung; und

Fig. 3    eine Einblendungsvariante einer übertragenen graphischen Darstellung in das Hintergrundbild des gemeinsamen Fahrerinformationsdisplays gemäß einem Ausführungsbeispiel der vorliegenden Erfindung.

BESCHREIBUNG DER AUSFÜHRUNGSBEISPIELE

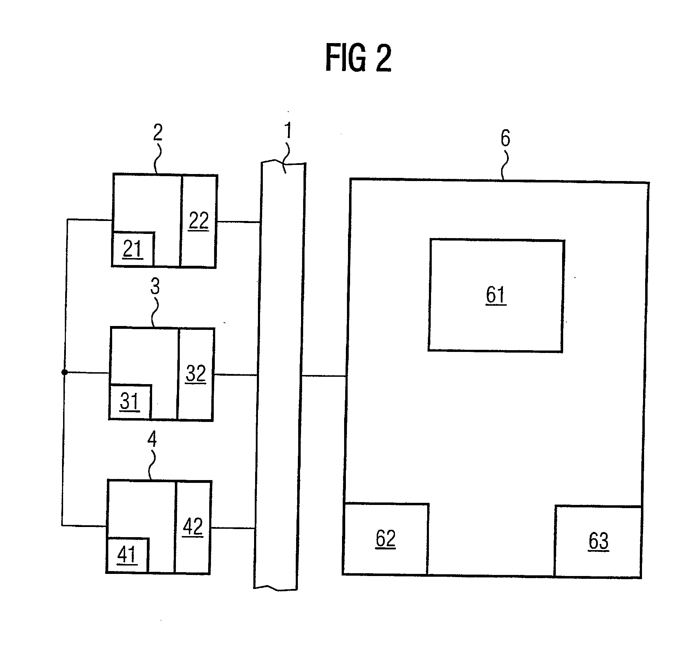

Fig. 2 zeigt ein Blockschaltbild einer Vorrichtung zur Anzeige von Fahrerinformationen in einem Kraftfahrzeug als Ausführungsbeispiel der vorliegenden Erfindung.

Zu dem in Fig. 2 dargestellten System gehört eine nicht gezeigte externe Bildverarbeitungseinrichtung, mit der bestimmte graphische Darstellungen erzeugt und vorverarbeitet werden.

In dieser Bildverarbeitungseinrichtung werden die von einem Graphik - Designer erstellten graphischen Darstellungen zunächst einem Supersampling unterzogen und anschließend wird dieses Supersampling gefiltert, wodurch der Randbereich zwischen der eigentlich darzustellenden Teilgraphik 8b und dem Hintergrund 8a der Teilgraphik mittels Zwischenfarben dargestellt wird. Dies stellt nur eine Möglichkeit unter vielen für eine Ausführung eines Antialiasing dar.

Anschließend werden in der Bildverarbeitungseinrichtung graphische Zweitdarstellungen erzeugt. Dafür werden den Farbbildpunkten des Supersamplings der Teilgraphik-Bitmap 8, die dem Hintergrund 8a der Teilgraphik-Bitmap 8 zugeordnet werden, als schwarze Bildpunkte und Farbbildpunkte, die der eigentlichen Teilgraphik 8b zugeordnet werden, als weiße Bildpunkte ausgebildet.

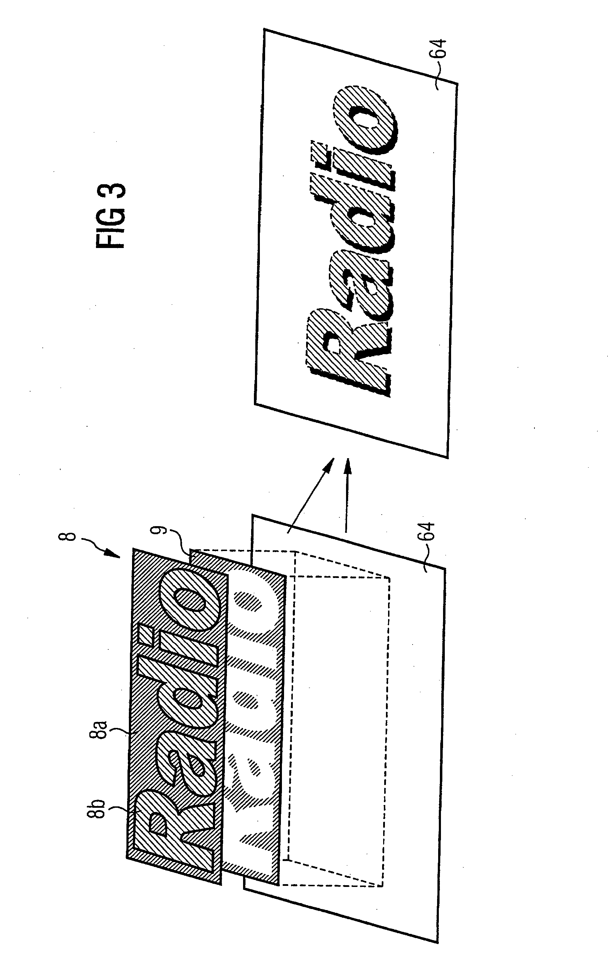

Dieses Supersampling wird durch dasselbe Antialiasing-Verfahren bearbeitet, wie die eigentliche Teilgraphik-Bitmap, wobei das Supersampling der graphischen Zweitdarstellung in der Bildverarbeitungseinrichtung gefiltert wird und das in Fig. 3 dargestellte Graubild 9 entsteht. Jedem Pixel des Graubildes 9 wird ein entsprechender $\alpha$ - Wert zugeordnet, wobei diese $\alpha$ - Werte den sogenannten $\alpha$ - Kanal bilden. Dabei kennzeichnet ein $\alpha$ - Wert von $\alpha = 0$, dass ein Pixel, bestehend aus einem Rot-, Grün- und einem Blauanteil, der Teilgraphik, im Folgenden als Source bezeichnet, volltransparent ist. Dagegen kennzeichnet ein $\alpha$ - Wert von $\alpha = 1$, dass ein Source - Pixel vollkommen opaque ist, d.h. dieses Pixel dominiert gegenüber dem konkurrierenden Pixel des Hintergrundes 64 (Destination) der graphischen Benutzeroberfläche 61 des gemeinsamen Fahrerinformationsdisplays 6.

Die Allgemeine Rechenvorschrift für die Composite - Methode für eine Kombination der Pixel des Hintergrundes 64 und der Pixel des Sourcebildes 8 lautet:

$$(1)$$

$$Compositepixel = \alpha \cdot \begin{pmatrix} R_{Source} \\ G_{Source} \\ B_{Source} \end{pmatrix} + (1-\alpha) \cdot \begin{pmatrix} R_{Destination} \\ G_{Destination} \\ B_{Destination} \end{pmatrix}$$

mit

R, G, B Rot- , Grün- , Blauanteil eines Pixels
$\alpha = [0...1]$, wobei
$\alpha = 0$ --> Source - Pixel voll transparent,
$\alpha = 1$ --> Source - Pixel voll opaque.

In der Bildverarbeitungseinrichtung werden nun im Voraus Substitutionen und bestimmte Rechenoperationen getätigt. Da der $\alpha$ - Wert bereits in der Bildverarbeitungseinrichtung bestimmt ist, können manche Rechenoperationen aus der Formel (1) bereits in dieser ausgeführt und substituiert werden. Es erfolgen folgende Vorabberechnungen:

$$\alpha \cdot R_{Source} = R^{*}_{Source}, \quad \alpha \cdot G_{Source} = G^{*}_{Source}, \quad \alpha \cdot B_{Source} = B^{*}_{Source}$$

$$\text{und} \quad 1 - \alpha = \alpha^{*}.$$

Somit erhält man mittels dieser Substitutionen aus der Formel (1) :

(2)

$$Compositepixel = \begin{pmatrix} R*_{Source} \\ G*_{Source} \\ B*_{Source} \end{pmatrix} + \alpha^* \cdot \begin{pmatrix} R_{Destination} \\ G_{Destination} \\ B_{Destination} \end{pmatrix}$$

Dadurch werden mit Hilfe des $\alpha$ - Kanals alle möglichen Rechenoperationen in der externen Bildverarbeitungseinrichtung ausgeführt. Dies ergibt den Vorteil, dass in dem Embedded System lediglich eine Multiplikation und eine Addition pro Pixel - Farbanteil auszuführen sind.

Das in Fig. 2 dargestellte System enthält drei Einzelgeräte, ein Radio 2, ein Telefon 3 und eine Navigationshilfe 4. In jedem Einzelgerät 2, 3, 4 ist ein zugehöriger Speicher 21, 31, 41 vorgesehen, in dem nun die zugehörigen Darstellungen des betreffenden Einzelgerätes 2, 3, 4 zusammen mit den jeweils zugehörigen $\alpha$ - Kanälen abgespeichert sind. Außerdem sind im jeweiligen Speicher 21, 31, 41 des betreffenden Einzelgerätes 2, 3, 4 die im Voraus ausgeführten Rechenoperationen mit abgespeichert.

Beim vorliegenden Beispiel sind die Sourcebilder zusammen mit dem entsprechenden $\alpha$ - Kanal in einem Bitmapformat abgespeichert, wodurch das Bildmaterial vorab, also Off - Line erzeugbar ist, denn die On - Line - Erzeugung des Bildmaterials ist bei der Durchführung eines Antialiasing-Verfahrens sehr aufwendig, und daher nicht in Embedded-Systemen durchführbar.

Eine im jeweiligen Einzelgerät vorgesehene Übertragungseinrichtung 22, 32, 42 überträgt gemäß einem vorbestimmten Bus - Kommunikationsschema (z.B. CAN-Busschema) eine jeweils benötigte graphische Darstellung zusammen mit dem entsprechenden $\alpha$ - Kanal und den im Voraus ausgeführten Rechenoperationen von den Speichern 21, 31, 41 des betreffenden Einzelgerätes 2, 3, 4 über einen Bus 1 an das gemeinsame Fahrerinformationsdisplay 6.

Das Fahrerinformationsdisplay 6 weist eine Recheneinrichtung 62 zum Ausführen bestimmter Rechenvorschriften auf. So müssen die in Speicher 21, 31, 41 gespeicherten Farbbildpunkte der darzustellenden graphischen Darstellung 8 mit den Pixeln des Hintergrundes 64 der graphischen Benutzeroberfläche 61 unter Berücksichtigung der entsprechenden $\alpha$ - Werte kombiniert werden. Dies geschieht mit der Rechenvorschrift (2).

Ferner besitzt das Fahrerinformationsdisplay 6 eine Darstellungseinrichtung 63, zum Beispiel einen üblichen Graphik-Controller, mit der die Gesamtdarstellung, bestehend aus dem Hintergrund 64 und der eingefügten Graphik des tatsächlich darzustellenden Symbols 8b, realisiert wird.

Durch das gemäß einer Ausführungsform der vorliegenden Erfindung ausgeführte Compositing-Verfahren ist wie in Fig. 3 ersichtlich ein korrektes Antialiasing der vor beliebigem Hintergrund eingefügtem Teilgraphiken erzielbar. Dabei werden rechenintensive Bildverarbeitungsoperationen wie Texture-Mapping von 3D-Modellen, Antialiasing usw. in einer Bildverarbeitungssoftware durchgeführt. Diese vorverarbeiteten Teilgraphik-Bitmaps lassen sich als Teilgraphiken mit entsprechenden $\alpha$-Kanal in den jeweiligen Einzelgeräten abspeichern. Die Anmutung von so aus Teilbildern zusammengesetzten Graphiken ist hervorragend und gleichwertig mit ansonsten nur mit hohem Rechenaufwand zu erreichenden Antialiasing-Darstellungen. Der verwendete Algorithmus benötigt gemäß der vorliegenden Erfindung im Idealfall zwei Operationen pro Grundfarbe eines Pixels und ist somit ideal auf die Verwendung in Embedded-Systemen ausgelegt.

Insbesondere sind sowohl beliebige Teilgraphiken von mehreren Einzelgeräten zusammen in einem beliebigen Hintergrund des Fahrerinformationsdisplays einfügbar, als auch Teilgraphiken über Teilgraphiken anzeigbar.

**Patentansprüche**

1. Verfahren zur grafischen Anzeige von Fahrerinformationen für ein Kraftfahrzeug, wobei die von verschiedenen, miteinander über einen Bus (1) vernetzten Einzelgeräten (2, 3, 4) herrührenden Fahrerinformationen als Vordergrund auf einem Hintergrund (64) eines gemeinsamen Fahrerinformationsdisplays (6) mit einer grafischen Benutzeroberfläche (61) darstellbar sind, mit folgenden Schritten: Ausführen vorbestimmter Rechenoperationen einer vorbestimmten Rechenvorschrift in einer externen Bildverarbeitungseinrichtung; Abspeichern von Teilgrafik-Bitmaps (8), entsprechend den darzustellenden Fahrerinformationen, mit zugehörigen $\alpha$-Kanälen und entsprechenden Ergebnissen der vorab ausgeführten Rechenoperationen im entsprechenden Einzelgerät (2, 3, 4), Übertragen der jeweils benötigten Teilgrafik-Bitmaps (8) mit den entsprechenden zugehörigen $\alpha$-Kanälen von dem Einzelgerät (2, 3, 4) über den Bus (1) an das gemeinsame Fahrerinformationsdisplay (6), Kombinieren der jeweils benötigten Teilgrafik-Bitmaps (8) und des Hintergrundes (64) der grafischen Benutzeroberfläche (61) des gemeinsamen Fahrerinformationsdisplays (6) unter Berücksichtigung der entsprechenden α-Kanäle gemäß der vorbestimmten Rechenvorschrift und Darstellen des Gesamtergebnisses auf der grafischen Benutzeroberfläche (61) des gemeinsamen Fahrerinformationsdisplays (6).

2. Verfahren nach Anspruch 1, **dadurch gekennzeichnet, dass** eine Filterung eines Supersamplings der Teilgrafik-Bitmaps (8) durchgeführt wird.

3. Verfahren nach einem der Ansprüche 1 oder 2, **dadurch gekennzeichnet, dass** aus den Teilgrafik-Bitmaps (8) grafische Zweitdarstellungen hergestellt werden, in denen Farbbildpunkte der Supersamplings der jeweiligen Teilgrafik-Bitmaps (8), die Hintergründen (8a) der Teilgrafik (8b) zugeordnet werden, als schwarze Bildpunkte, und Farbbildpunkte, die nicht den Hintergründen (8a) zugeordnet werden, als weiße Bildpunkte ausgebildet werden.

4. Verfahren nach einem der vorhergehenden Ansprüche, **dadurch gekennzeichnet, dass** die grafischen Darstellungen (8) mit den entsprechenden zugehörigen α-Kanälen im jeweiligen Einzelgerät (2, 3, 4) in einem komprimierten Format abgespeichert werden.

5. Vorrichtung zu grafischen Anzeige von Fahrerinformationen für ein Kraftfahrzeug, wobei die von verschiedenen, miteinander über einen Bus (1) vernetzten Einzelgeräten (2, 3, 4) herrührenden Fahrerinformationen als Vordergrund auf einem Hintergrund (64) eines gemeinsamen Fahrerinformationsdisplays (6) mit einer grafischen Benutzeroberfläche (61) darstellbar sind, mit einem jeweiligen in dem betreffenden Einzelgerät (2, 3, 4) vorgesehenen Speicher (21, 31, 41) zum Abspeichern von Teilgrafik-Bitmaps (8) entsprechend den darzustellenden Fahrerinformationen, mit zugehörigen α-Kanälen und entsprechenden Ergebnissen vorab ausgeführter vorbestimmter Rechenoperationen einer vorbestimmten Rechenvorschrift im entsprechenden Einzelgerät (2, 3, 4), einer jeweiligen in dem betreffenden Einzelgerät (2, 3, 4) vorgesehenen Übertragungseinrichtung (22, 32, 42) zum Übertragen der jeweils benötigten Teilgrafik-Bitmaps (8) mit den entsprechenden zugehörigen α-Kanälen von dem Einzelgerät (2, 3, 4) über den Bus (1) an das gemeinsame Fahrerinformationsdisplay (6), einer in dem gemeinsamen Fahrerinformationsdisplay (6) vorgesehenen Recheneinrichtung (62) zum Kombinieren der jeweils benötigten Teilgrafik-Bitmaps (8) und des Hintergrundes (64) der grafischen Benutzeroberfläche (61) des gemeinsamen Fahrerinformationsdisplays (6) unter Berücksichtigung der entsprechenden α-Kanäle gemäß der vorbestimmten Rechenvorschrift und einer in dem gemeinsamen Fahrerinformationsdisplay (6) vorgesehenen Darstellungseinrichtung (63) zum Darstellen des Gesamtergebnisses auf der grafischen Benutzeroberfläche (61) des Fahrerinformationsdisplays (6).

6. Vorrichtung nach Anspruche 5, **dadurch gekennzeichnet, dass** die Teilgrafik-Bitmaps (8) mit den entsprechenden zugehörigen α-Kanälen im Speicher (21, 31, 41) des jeweiligen Einzelgerätes (2, 3, 4) in einem komprimierten Format abgespeichert sind.

**Claims**

1. Method for the graphical display of driver information for a motor vehicle, wherein the driver information coming from various single appliances (2, 3, 4) networked to one another via a bus (1) can be presented as foreground on a background (64) of a shared driver information display (6) with a graphical user interface (61), having the following steps: execution of predetermined computation operations from a predetermined computation code in an external image processing device, storage of graphics element bitmaps (8), corresponding to the driver information to be presented, with associated α channels and corresponding results from the previously executed computation operations in the corresponding single appliance (2, 3, 4), transmission of the respectively required graphics element bitmaps (8) with the corresponding associated α channels from the single appliance (2, 3, 4) via the bus (1) to the shared driver information display (6), combination of the respectively required graphics element bitmaps (8) and the background (64) of the graphical user interface (61) of the shared driver information display (6) taking account of the corresponding α channels on the basis of predetermined computation code, and presentation of the overall result on the graphical user interface (61) of the shared driver information display (6).

2. Method according to Claim 1, **characterized in that** a supersampling of the graphics element bitmaps (8) is filtered.

3. Method according to either of Claims 1 and 2, **characterized in that** graphical secondary presentations are produced from the graphics element bitmaps (8), in which colour pixels from the supersamplings of the respective graphics element bitmaps (8) that are associated with backgrounds (8a) of the graphics element (8b) are produced as black pixels, and colour pixels that are not associated with the backgrounds (8a) are produced as white pixels.

4. Method according to one of the preceding claims, **characterized in that** the graphical presentations (8) with the corresponding associated $\alpha$ channels are stored in the respective single appliance (2, 3, 4) in a compressed format.

5. Apparatus for the graphical display of driver information for a motor vehicle, wherein the driver information coming from various single appliances (2, 3, 4) networked to one another via a bus (1) can be presented as foreground on a background (64) of a shared driver information display (6) with a graphical user interface (61), having a respective memory (21, 31, 41), provided in the relevant single appliance (2, 3, 4), for storing graphics element bitmaps (8) corresponding to the driver information that is to be presented, with associated $\alpha$ channels and corresponding results from previously executed predetermined computation operations from a predetermined computation code in the corresponding single appliance (2, 3, 4), a respective transmission device (22, 32, 42), provided in the relevant single appliance (2, 3, 4), for transmitting the respectively required graphics element bitmaps (8) with the corresponding associated $\alpha$ channels from the single appliance (2, 3, 4) via the bus (1) to the shared driver information display (6), a computation device (62), provided in the shared driver information display (6), for combining the respectively required graphics element bitmaps (8) and the background (64) of the graphical user interface (61) of the shared driver information display (6) taking account of the corresponding $\alpha$ channels on the basis of the predetermined computation code, and a presentation device (63), provided in the shared driver information display (6), for presenting the overall result on the graphical user interface (61) of the driver information display (6).

6. Apparatus according to Claim 5, **characterized in that** the graphics element bitmaps (8) with the corresponding associated $\alpha$ channels are stored in the memory (21, 31, 41) of the respective single appliance (2, 3, 4) in a compressed format.

**Revendications**

1. Procédé d'affichage graphique d'informations au conducteur d'un véhicule automobile, les informations pour le conducteur, provenant de différents appareils distincts (2, 3, 4) raccordés en réseau les uns aux autres par l'intermédiaire d'un bus (1), pouvant être présentées en avant-plan sur un arrière-plan (64) d'un affichage commun (6) d'informations au conducteur qui présente une surface graphique d'utilisateur (61), le procédé présentant les étapes suivantes :

exécution d'opérations prédéterminées de calcul selon une prescription prédéterminée de calcul dans un dispositif externe de traitement d'images,
conservation de graphiques partiels en bitmaps (8) correspondant aux informations à présenter au conducteur, des canaux $\alpha$ associés et des résultats correspondants des opérations de calcul exécutées précédemment dans l'appareil distinct correspondant (2, 3, 4),
par l'intermédiaire du bus (1), transfert des graphiques partiels en bitmaps (8) nécessaires et des canaux $\alpha$ associés correspondants de l'appareil distinct (2, 3, 4) à l'affichage commun (6) d'informations au conducteur,
combinaison des différents graphiques partiels en bitmaps (8) nécessaires et de l'arrière-plan (64) de la surface graphique d'utilisateur (61) de l'affichage commun (6) d'informations au conducteur en tenant compte des canaux $\alpha$ correspondants, selon la prescription prédéterminée de calcul, et
présentation du résultat global sur la surface graphique d'utilisateur (61) de l'affichage commun (6) d'informations au conducteur.

2. Procédé selon la revendication 1, **caractérisé en ce qu'**un filtrage d'un super-échantillonnage des graphiques partiels en bitmaps (8) est exécuté.

3. Procédé selon l'une des revendications 1 ou 2, **caractérisé en ce qu'**à partir des graphiques partiels en bitmaps (8), des représentations graphiques sont formées dans lesquelles les points d'image en couleur du super-échantillonnage des différents graphiques partiels en bitmaps (8) qui sont associés à des arrière-plans (8a) des graphiques partiels (8b) sont présentés sous la forme de points d'image noirs et les points d'image en couleur qui ne sont pas associés aux arrière-plans (8a) sont présentés sous la forme de points d'image blancs.

4. Procédé selon l'une des revendications précédentes, **caractérisé en ce que** les représentations graphiques (8) et les canaux $\alpha$ associés correspondants sont conservés en mémoire en format comprimé dans chaque appareil distinct (2, 3, 4).

**5.** Dispositif d'affichage graphique d'informations au conducteur d'un véhicule automobile, dans lequel les informations pour le conducteur, provenant de différents appareils distincts (2, 3, 4) raccordés en réseau les uns aux autres par l'intermédiaire d'un bus (1), peuvent être présentées en avant-plan sur un arrière-plan (64) d'un affichage commun (6) d'informations au conducteur qui présente une surface graphique d'utilisateur (61),

le dispositif présentant une mémoire (21, 31, 41) prévue dans l'appareil distinct (2, 3, 4) concerné, la mémoire conservant des graphiques partiels en bitmaps (8) correspondant aux informations à présenter au conducteur, des canaux $\alpha$ associés et des résultats correspondants des opérations de calcul exécutées précédemment selon use prescription prédéterminée de calcul dans l'appareil distinct correspondant (2, 3, 4),

un dispositif de transfert (22, 32, 42) qui transfère par l'intermédiaire du bus (1) les graphiques partiels en bitmaps (8) nécessaires et les canaux $\alpha$ associés correspondants de l'appareil distinct (2, 3, 4) à l'affichage commun (6) d'informations au conducteur,

un dispositif de calcul (62) prévu dans l'affichage commun (6) d'informations au conducteur et qui combine les différents graphiques partiels en bitmaps (8) nécessaires et l'arrière-plan (64) de la surface graphique d'utilisateur (61) de l'affichage commun (6) d'informations au conducteur en tenant compte des canaux $\alpha$ correspondants, selon la prescription prédéterminée de calcul, et

un dispositif de présentation (63) prévu dans l'affichage commun (6) d'informations au conducteur pour présenter le résultat global sur la surface graphique d'utilisateur (61) de l'affichage (6) d'informations au conducteur.

**6.** Dispositif selon la revendication 5, **caractérisé en ce que** les bitmaps (8) de graphiques partiels avec les canaux $\alpha$ associés correspondants sont conservés en format comprimé dans la mémoire (21, 31, 41) de chaque appareil distinct (2, 3, 4).

FIG 1

# FIG 2

FIG 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5089826 A
- US 5379129 A